# EUROPÄISCHE PATENTANMELDUNG

(11) **EP 2 400 173 A1**
(43) Veröffentlichungstag der Anmeldung: **28.12.2011**
(21) Anmeldenummer: 11162150.4
(22) Anmeldetag: 13.04.2011
(51) Int. Cl.: F16C 19/50, F16H 55/17, F16H 57/00

(54) **Getriebevorrichtung und Zahnrad für eine Getriebevorrichtung**

(30) Priorität: 03.05.2010 DE 102010019067
(71) Anmelder: Schaeffler Technologies GmbH & Co. KG, 91074 Herzogenaurach (DE)
(72) Erfinder: Wiesneth, Thomas, 91074, Herzogenaurach (DE)

(57) **Zusammenfassung**

Die Erfindung betrifft eine Getriebevorrichtung (1, 2) mit mindestens zwei Getriebeelementen (4, 5), von denen ein Getriebeelement (4) drehbar um eine Rotationsachse (3) zu dem anderen Getriebeelement (5) an dem anderen Getriebeelement (5) gelagert ist, wobei wenigstens eines der Getriebeelemente (4, 5) zumindest zwei nebeneinander angereihte kreiszylindrische Funktionsflächen (7, 8) aufweist, welche dem anderen Getriebeelement (4, 5) zugewandt sind und deren Durchmesser sich unterscheiden.

## Beschreibung

### Gebiet der Erfindung

Die Erfindung betrifft eine Getriebevorrichtung mit mindestens zwei Getriebeelementen, von denen ein Getriebeelement drehbar um eine Rotationsachse zu dem anderen Getriebeelement an den anderen Getriebeelement gelagert ist, wobei wenigstens eines der Getriebeelemente zumindest zwei nebeneinander angereihte kreiszylindrische Funktionsflächen aufweist, welche dem anderen Getriebeelement zugewandt sind und deren Durchmesser sich unterscheiden. Die Erfindung betrifft weiter eine Getriebevorrichtung mit einem drehbar auf einem Wellenabschnitt gelagerten Zahnrad, wobei das Zahnrad mittels wenigstens eines Wälzlagers drehbar auf dem Wellenabschnitt gelagert ist, und wobei das Wälzlager in einem Ringspalt radial zwischen dem Wellenabschnitt und dem Zahnrad eingesetzt ist, und dabei der Ringspalt in wenigstens einer radialen Richtung durch zwei benachbarte in gleiche radiale Richtung gewandte zylindrische Funktionsflächen begrenzt ist, wobei die gleich gewandten zylindrischen Funktionsflächen im Durchmesser voneinander abweichen, und ein Zahnrad mit einer Stufenbohrung.

### Hintergrund der Erfindung

Eine derartige Getriebevorrichtung ist beispielsweise in DE 42 19 154 A1 beschrieben, die Teil eines Automatikgetriebes für Kraftfahrzeuge ist. In einem Getriebegehäuse ist ein Planetenradsatz angeordnet, der an einem Planetenradträger aufgenommen ist. Der Planetenradträger ist mit einer bremsbaren Bremstrommel verbunden. Mit der Bremstrommel kann der Planetenradträger in beide Drehrichtungen festgelegt werden. Die Bremstrommel ist über eine Rollen-Freilaufanordnung oder Klemmkörper-Freilaufanordnung in nur einer Drehrichtung am Getriebegehäuse abstützbar. Die Freilaufanordnung ist aus einem Getriebeelement gebildet, das ein gehäusefester wellenartig ausgebildeter Innenring ist. Die Freilaufanordnung ist aus einem weiteren Getriebeelement gebildet, welches mittels einer Reihe Rollen eines Wälzlagers drehbar auf dem Innenring gelagert ist und welches in der Form eines der Bremstrommel zugeordneten Außenrings mit Stufenbohrung vorliegt. Der Außenring ist mit der Bremstrommel verbunden. Die Stufenbohrung weist zwei innenzylindrisch ausgebildete Funktionsflächen auf. Die eine der Funktionsflächen ist die äußere Laufbahn für die Rollen der Reihe Wälzkörper. Die andere Funktionsfläche ist Lauf- oder Klemmfläche für eine Reihe Roll- oder Klemmkörper des Freilaufs. Der Freilauf weist außen einen größeren Durchmesser auf, als die Reihe Wälzkörper. Dementsprechend ist der Durchmesser der radial nach innen gerichteten und als Laufbahn ausgebildeten Funktionsfläche für das Wälzlager kleiner als der Durchmesser der benachbarten gleich gerichteten Funktionsfläche für den Freilauf. Der Unterschied in den Durchmessern liegt in diesem Fall darin, dass für die Körper des Freilaufs mehr radialer Bauraum benötigt wird als für die Rollen des Wälzlagers.

Zahnräder sind oft mittels eines zweireihigen Wälzlagers oder mit zwei Wälzlagern auf einem Wellenelement gelagert. Bei breiten Zahnrädern sind auch mehr als zwei Reihen Wälzkörper in die Lagerung eingesetzt. Derartige Lagerungen werden zum Beispiel eingesetzt, wenn sich das Wellen element aufgrund hoher Belastung stark durchbiegt. Durch die Durchbiegung oder andere Lageänderungen der Wellenelemente oder durch unsymmetrischen Kraftangriff am Zahnrad kann die Lastverteilung in den Reihen des Wälzlagers unterschiedlich sein, so dass eine Reihe höheren Belastungen und die andere Reihe geringeren Belastungen ausgesetzt ist. Um von Reihe zu Reihe gleiche Lebensdauerwerte zu erreichen, kann demzufolge eine Reihe den höheren Belastungen angepasste größere Wälzkörper und damit höhere Tragzahlwerte aufweisen als die andere. Es sind Anwendungen bekannt, in denen aus diesem Grund Zahnräder mit einer Stufenbohrung versehen werden. Die Stufenbohrung ist durch zwei nebeneinander angeordnete radial nach innen gerichtete zylindrische Funktionsflächen gebildet, deren Durchmesser sich voneinander unterscheiden. In einem derartigen Zahnrad kann dann an der Funktionsfläche mit dem größeren Durchmesser eine Reihe Wälzkörper mit höheren und an der Funktionsfläche mit dem kleineren Durchmesser eine Reihe Wälzkörper mit geringeren Tragzahlen eingesetzt werden. Die Reihen weisen in der Regel den gleichen Innendurchmesser auf, unterscheiden sich jedoch hinsichtlich des Außendurchmessers.

Die Herstellung von Zahnrädern mit Stufenbohrungen verglichen zur Herstellung von Zahnrädern mit Durchgangsbohrungen ist für den Fachmann offensichtlich aufwändiger, insbesondere dann, wenn die Funktionsflächen geschliffen werden müssen. Deshalb wird häufig auf den Einsatz von Zahnrädern mit einer gestuften Bohrung verzichtet und stattdessen wird eine der Wälzkörperreihen abhängig von den höchsten Belastungen richtig und die andere überdimensioniert. Mehr beanspruchter Bauraum, Mehrkosten und erhöhtes Gewicht müssen in Kauf genommen werden.

Zusätzlicher fertigungstechnischer Aufwand muss auch betrieben werden, wenn beispielsweise Getriebewellen radial gestuft ausgeführt sind und deshalb Funktionsflächen unterschiedlicher Durchmesser aufweisen.

Losräder in Fahrzeuggetrieben sind häufig hinsichtlich der Lage der Verzahnung unsymmetrisch ausgelegt. Sie weisen dazu eine Nabe auf, die axial zu dem Zahnkranz versetzt ist. Auf der Nabe sind dann oft Elemente einer Synchronschaltkupplung angeordnet. Losräder sind häufig mit zwei Reihen Rollen oder Nadeln gelagert. Zahnkranz und Lagerstelle sind deshalb oft axial zueinander versetzt oder unsymmetrisch belastet, so dass mit den zuvor beschriebenen Problemen der ungleichen Belastung der Wälzkörperreihen zu rechnen ist. Tragzahlen des zwei- oder mehrreihigen Wälzlagers können nur dadurch erhöht werden, dass die Breite der eingesetzten Wälzkörpers erhöht wird, da radial insbesondere in der Nabe kein Bauraum zur Verfügung steht. Das wirkt sich oft nachteilig auf das Gesamtkonzept des Getriebes aus.

In DE 100 62 444 A1 ist eine Getriebevorrichtung mit einer Losradanordnung beschrieben. Das Losrad ist zu einem Muffenträger benachbart drehbar auf einer Getriebewelle gelagert. Auf dem Muffenträger sitzt eine Schaltmuffe, die im Zusammenwirken mit Reibflächen mit einer Kupplungsverzahnung des Losrads in Eingriff gebracht werden kann. Die Kupplungsverzahnung ist an einem Synchronring ausgebildet. Der Synchronring ist drehfest auf einer Nabe des Losrades aufgenommen. Der Nabe schließt sich in axialer Richtung der Zahnkranz des Losrades an. Das Losrad ist mittels eines zweireihigen Nadellagers auf der Getriebewelle gelagert. Eine Reihe der Nadeln ist im Wesentlichen in der Nabe und direkt unter dem Synchronring angeordnet. Lagerstelle und Zahnkranz sind demnach zueinander axial versetzt. Die zweite Reihe weist die gleichen radialen Abmessungen auf wie die erste Reihe und ist radial zwischen einer Hälfte des Zahnkranzes und der Welle eingesetzt. Radial zwischen der anderen Hälfte des Zahnrades und der Welle sitzen axiale Sicherungselemente, die größeren radialen Bauraum als das Wälzlager beanspruchen, so dass die Getriebewelle gestuft ist und das Losrad mit einer Stufenbohrung versehen ist. Die außen-zylindrische Funktionsfläche für die Wälzlaufbahn des Wälzlagers weist eine größeren Durchmesser auf als die außen-zylindrische Funktionsfläche zum Führen der axialen Sicherungselemente. Die innen-zylindrische Funktionsfläche für die Wälzlaufbahn des Wälzlagers weist einen geringeren Durchmesser auf, als die innen-zylindrische Funktionsfläche zur Führung der axialen Sicherungselemente.

### Beschreibung der Erfindung

Die Aufgabe der Erfindung ist es daher, Getriebevorrichtungen und Zahnräder für Getriebevorrichtungen der gattungsbildenden Art zu schaffen, die sich platzsparend und kostengünstig herstellen lassen. Weiterhin sind Lagerstellen in derartigen Getriebevorrichtungen zu schaffen, die optimal anhand tatsächlicher Belastungen der Wälzkörperreihen und nicht vorwiegend aus fertigungstechnischen Gründen ausgelegt sind.

Diese Aufgabe ist nach dem Gegenstand des Anspruches 1 und weiterer unabhängiger Ansprüche gelöst.

In der Getriebevorrichtung sind mindestens zwei aber alternativ auch mehr Getriebeelemente drehbar um eine Rotationsachse zu dem anderen Getriebeelement an oder auf dem anderen Getriebeelement gelagert. Entweder eines der Getriebeelemente ist drehbar auf dem anderen oder beide sind relativ zueinander drehbar.

Mindestens eines der Getriebeelemente weist wenigstens zwei nebeneinander angereihte kreiszylindrische Funktionsflächen auf, welche dem anderen Getriebeelement zugewandt sind und deren Durchmesser sich unterscheiden,

Getriebevorrichtungen sind Teile eines Getriebes in Fahrzeugen oder vollständige Getriebe, in denen hinsichtlich ihrer Lagerung gestufte Getriebeelemente drehbar aneinander, ineinander oder aufeinander gelagert sind. Getriebeelemente sind Wellenelemente, Zahnräder, Ringe, Träger, Muffen und alle anderen denkbaren Bauelemente eines Getriebes.

Die Zahnräder sind beispielsweise Planetenräder, Umkehrräder (z.B. Zwischenräder für Rückwärtsgang) oder Losräder.

Wellenelemente sind beispielsweise Getriebewellen, Achsen, Zapfen und Bolzen, die geeignet sind Zahnräder und weitere Getriebeelemente drehbar aufzunehmen.

Zylindrische Funktionsflächen sind Wälzbahnen für Wälzkörper, Lagersitze für Lagerringe oder Führungsflächen, Spannflächen, Dichtungssitze usw..

Wälzkörper sind Kugeln, Rollen und Nadeln. Nadeln sind dünne Rollen, deren Länge mindestens dem Zweieinhalbfachen ihres Durchmessers entspricht. Gemäß Erfindung sind die kreiszylindrischen Funktionsflächen an einem Hülsenelement ausgebildet. Das Hülsenelement ist mit dem einen der Getriebeelemente verbunden. Die jeweilige Stufung der Funktionsflächen ist demnach an einem separaten Hülsenelement ausgebildet. Hülsenelemente sind hohlzylindrische oder andere vorzugsweise rotationssymmetrische hohle Elemente mit vorzugsweise dünnen Wänden, die entweder innen- oder außenumfangsseitig mit den kreiszylindrischen Funktionsflächen versehen sind. Diese Hülsenelemente sind entweder in das jeweilige Getriebeelement eingesetzt oder auf dieses aufgesetzt. Die von den Funktionsflächen abgewandte Seite für den Sitz in oder auf dem Getriebeelement ist vorzugsweise zylindrisch, kann aber auch beliebige andere Querschnitte, wie z.B. viereckige oder polygonförmige, aufweisen. Das Hülsenelement ist vorzugsweise in das Getriebeelement eingepresst oder aufgepresst.

Der Vorteil der Erfindung liegt darin, dass sich die Getriebeelemente wie Zahnräder und Getriebewellen einfacher herstellen lassen. Der zylindrische Sitz für das Hülsenelement kann den benachbarten Funktionsflächen an der Welle angepasst werden. Das Zahnrad oder andere beliebige Ringe können mit einer axial durchgehenden Bohrung kostengünstiger hergestellt werden.

Das Hülsenelement ist spanabhebend, vorzugsweise aus einem Rohr hergestellt. Eine bevorzugte Ausführung der Erfindung sieht vor, dass das Hülsenelement spanlos z.B. durch Kaltumformen wie Fließpressen oder Ziehen hergestellt ist. Die Funktionsflächen lassen sich auf diese Weise kostengünstig u.U. mit Wälzlaufbahnqualität der Oberflächen herstellen, so dass auf Schleifen sogar gänzlich verzichtet werden kann. Die Stufen werden durch plastisches Verdrängen des Ausgangsmaterials hergestellt.

Eine Ausgestaltung der Erfindung sieht vor, dass das Hülsenelement mit innen-kreiszylindrisch ausgebildeten Funktionsflächen konzentrisch zur Rotationsachse des Zahnrads in einem Zahnrad sitzt. Das Zahnrad ist vorzugsweise mit einer Bohrung durchgängig gleichen Durchmessers versehen, in die das Hülsenelement vorzugsweise eingepresst oder mit einem Passsitz montiert ist. Der Vorteil der Erfindung liegt auch daran, dass die Zuordnung von Zahnrad und Hülsenelement nach dem Baukastenprinzip vorgenommen werden kann. Je nach Belastung können Zahnrädern gleicher Bauart und Abmessung Hülsenelemente verschiedener Nenndurchmesser an den Funktionsflächen zusortiert werden. Alternativ können hinsichtlich ihrer Innenabmessungen normierten Hülsenelementen verschiedenartig ausgeführte Zahnräder zugeordnet werden. Der Außendurchmesser des jeweiligen Hülsenelements ist dabei an einen Normdurchmesser der Zahnräder angepasst oder umgehrt. Die Teilevielfalt und damit der Aufwand für die Fertigung, die Lagerhaltung, die Montage und den Transport kann reduziert werden. Die Fertigungslose für Zahnräder oder Hülsenelemente werden größer und die Herstellung damit kostengünstiger.

Auf Wellenelementen wie Getriebewellen oder anderen rotationssymmetrischen Elementen angeordnete Hülsenelemente weisen Adapterfunktionen auf, mit denen von der zylindrischen Form abweichende Querschnitte der Wellenelemente an die erforderlichen kreiszylindrischen Funktionsflächen angepasst werden. Das Hülsenelement weist dann innen die von der kreiszylindrischen Form abweichenden Negativform des Wellensitzes und außen die zylindrischen Funktionsflächen und weitere beliebige Formen auf. Gleichzeitig oder alternativ dazu gleicht das Hülsenelement Durchmesserunterschiede aus. Das Wellenelement muss nicht mit verschiedenen Durchmesserstufen sondern kann mit weniger Stufen oder mit einer durchgehend zylindrischen Oberfläche gefertigt werden. Die Herstellung ist kostengünstiger.

Die Erfindung sieht eine Getriebevorrichtung vor, die wenigstens ein drehbar auf einem Wellenabschnitt gelagertes Zahnrad aufweist, wobei das Zahnrad mittels wenigstens eines Wälzlagers drehbar auf dem Wellenabschnitt gelagert ist. Das oder die Wälzlager können gleichen Typs oder sich hinsichtlich des Typs von Reihe zu Reihe voneinander unterscheiden. Sie sind ein- oder mehrreihig und sind in einem Ringspalt radial zwischen dem Wellenabschnitt und dem Zahnrad eingesetzt. Eine Reihe Wälzkörper ist durch umfangsseitig vorzugsweise auf einer Umfangslinie verteilte und zueinander benachbarte Wälzkörper gleicher oder unterschiedlicher Ausführung gebildet.

Wälzlager sind beispielsweise Nadel- oder Rollenkränze, alternativ Kugellager. In Nadel- oder Rollenkränzen sind die Nadeln oder Rollen in Käfigen geführt. Die Wälzlaufbahnen für die Wälzkörper sind direkt die Funktionsflächen und damit direkt an dem Getriebeelement ausgebildet oder an beliebigen an Funktionsflächen sitzenden Lagerringen ausgebildet.

Die gleich umfangsseitig radial nach außen oder innen gewandten zylindrischen Funktionsflächen weichen im Durchmesser voneinander ab. Wenigstens ein Paar nach innen gewandter oder ein Paar nach außen gewandter der zylindrischen Funktionsflächen ist an einem zumindest teilweise zwischen dem Wellenabschnitt und dem Zahnrad angeordneten hohlzylindrischen Bauteil ausgebildet. Das Paar nach innen gewandter Funktionsflächen ist innen an einem hohlzylindrischen Bauteil, wie z.B. an einer Buchse in dem Zahnrad, und das Paar nach außen gewandter außen an einem hohlzylindrischen ringförmigen Bauteil, wie an einem Innenring, ausgebildet, das auf der Welle sitzt.

### Beschreibung der Zeichnungen

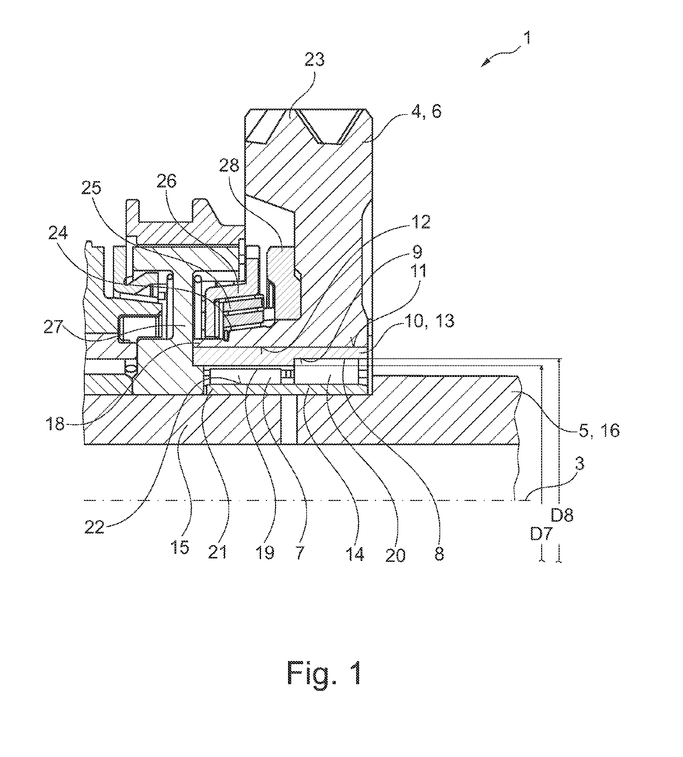

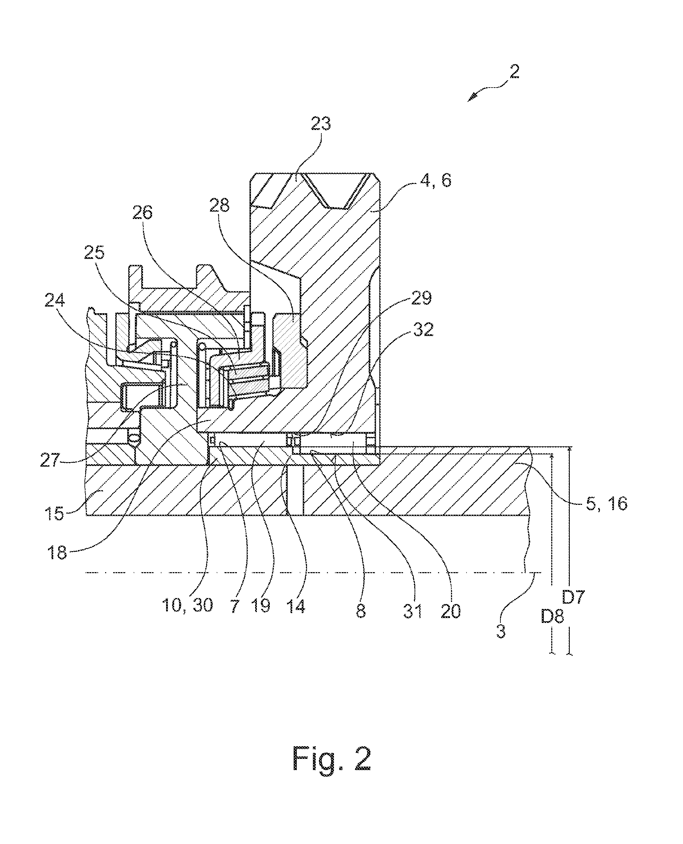

Die Erfindung wird nachfolgend anhand von Ausführungsbeispielen näher mit den Figuren 1 und 2 erläutert. Beide Figuren zeigen Ausschnitte von Getriebevorrichtungen 1 und 2 in Längsschnitten, geschnitten entlang der Rotationsachse 3 der Getriebevorrichtungen 1 bzw. 2.

Die Getriebevorrichtung 1 nach Figur 1 ist mit zwei Getriebeelementen 4 und 5 versehen. Das Getriebeelement 4 ist ein als Losrad ausgebildetes Zahnrad 6, welches drehbar um die Rotationsachse 3 zu dem anderen Getriebeelement 5 auf dem anderen Getriebeelement 5 gelagert ist. Das Losrad ist mit einer Stufenbohrung 9 versehen, und weist dazu zwei nebeneinander angereihte innenkreiszylindrische Funktionsflächen 7 und 8 an einem Hülsenelement 10 in Form einer Buchse 13 auf, welche dem anderen Getriebeelement 5 zugewandt sind und welche sich von ihren Durchmessern D7 und D8 her unterscheiden. Das Hülsenelement 10 ist in das Zahnrad 6 eingepresst und weist dazu eine außenzylindrische Fläche 11 auf, deren Durchmesser dem Presssitz in der durchgängigen Bohrung 12 des Zahnrades 6 angepasst ist.

Das Zahnrad 6 mittels wenigstens eines Wälzlagers 14 drehbar auf dem einem Wellenabschnitt 15 des als Getriebewelle 16 ausgebildeten Getriebeelements 5 gelagert. Das Wälzlager 14 ist in einem Ringspalt radial zwischen dem Wellenabschnitt 15 und dem Zahnrad 6 eingesetzt. Der Ringspalt ist radial durch die zwei benachbarten in die gleiche radiale Richtung gewandten zylindrischen Funktionsflächen 7 und 8 und in die andere Richtung durch eine Außenmantelfläche 22 begrenzt. Die Funktionsflächen 7 und 8 sind die äußeren Laufbahnen für jeweils mindestens eine der nebeneinander angeordneten Reihen Wälzkörper 19 und 20 des Wälzlagers 14. Auf dem Wellenabschnitt 15 ist ein Innenring 21 mit einer außenzylindrischen Mantelfläche 22 aufgepresst. Die Mantelfläche 22 ist Wälzkörperlaufbahn für die Wälzkörper 19 und 20.

Das Zahnrad 6 ist aus einer Nabe 18 und aus einem Zahnkranz 23 gebildet, wobei sich die Nabe 18 axial teilweise unter den Zahnkranz 23 erstreckt. Auf der Nabe 18 sind verschiedene Reibelemente 24, 25 und 26 einer Synchronisation einer Synchronkupplung 27 sowie ein Kupplungskörper 28 angeordnet. Der radiale Bauraum unter der Nabe 18 ist demnach gering. Das Zahnrad 6 ist unsymmetrisch belastet. Die höhere Belastung wirkt an der Reihe mit den Wälzkörpern 20. Die Funktionsfläche 8 weist einen Durchmesser D8 auf, der größer ist als der Durchmesser D7 der anderen Funktionsfläche 7, so dass sich für die Reihe der Wälzkörper 20 ein größerer radialer Abstand zwischen der Funktionsfläche 8 und der Mantelfläche 22 ergibt als es der radiale Abstand zwischen der Funktionsfläche 7 und der Mantelfläche 22 ist. Dementsprechend sind die Wälzkörper 20 im Durchmesser größer als die Wälzkörper 19, so dass die Reihe mit den Wälzkörpern 20 bei einer entsprechenden Anzahl gleichmäßig am Umfang verteilter Wälzkörper 20 größere Tragzahlen aufweist.

Die Getriebevorrichtung 2 nach Figur 2 ist mit den zwei Getriebeelementen 4 und 5 versehen. Das Getriebeelement 4 ist ein als Losrad ausgebildetes Zahnrad 6, welches drehbar um die Rotationsachse 3 zu dem anderen Getriebeelement 5 auf dem anderen Getriebeelement 5 gelagert ist. Das Losrad 6 ist mit einer durchgängig zylindrischen Bohrung 29 versehen.

Das Getriebeelement 5 ist ein Wellenabschnitt 15 einer Getriebewelle 16. Auf dem Wellenabschnitt 5 ist ein Bauteil 17 in Form eines gestuften Innen rings 30 aufgepresst und weist zwei nebeneinander angereihte kreiszylindrische Funktionsflächen 7 und 8 auf, welche dem anderen Getriebeelement 4 zugewandt sind und welche sich von ihren Durchmessern D7 und D8 her unterscheiden. Das Bauteil 17 ist auf den Wellenabschnitt 15 aufgepresst und weist dazu eine innenzylindrische Fläche 31 auf, deren Durchmesser dem Presssitz auf dem Wellenabschnitt 15 angepasst ist.

Das Zahnrad 6 mittels wenigstens eines Wälzlagers 14 gelagert. Das Wälzlager 14 ist in einem Ringspalt radial zwischen dem Wellenabschnitt 15 und dem Zahnrad 6 eingesetzt. Der Ringspalt ist radial durch die zwei benachbarten in gleiche radiale Richtung gewandten zylindrische Funktionsflächen 7 und 8 und durch eine Innenmantelfläche 32 der Bohrung 29 begrenzt. Die Funktionsflächen 7 und 8 sind die inneren Laufbahnen für jeweils mindestens eine der nebeneinander angeordneten Reihen Wälzkörper 19 und 20 des Wälzlagers 14. Die innenzylindrische Innenmantelfläche 32 der Bohrung 29 ist äußere Laufbahn für die Wälzkörper 19 und 20.

Das Zahnrad 6 ist aus einer Nabe 18 und aus einem Zahnkranz 23 gebildet, wobei sich die Nabe 18 axial teilweise unter den Zahnkranz 23 erstreckt. Auf der Nabe 18 sind verschiedene Reibelemente 24, 25 und 26 einer Synchronisation einer Synchronkupplung 27 sowie ein Kupplungskörper 28 angeordnet. Der radiale Bauraum unter der Nabe 18 ist demnach gering. Das Zahnrad 6 ist unsymmetrisch belastet. Die höhere Belastung wirkt an der Reihe mit den Wälzkörpern 20. Die Funktionsfläche 7 weist einen Durchmesser D7 auf, der größer ist als der Durchmesser D8 der anderen Funktionsfläche 8, so dass sich für die Reihe der Wälzkörper 20 ein größerer radialer Abstand zwischen der Funktionsfläche 8 und der Innenmantelfläche 32 ergibt als es der radiale Abstand zwischen der Funktionsfläche 7 und der Innenmantelfläche 32 ist. Dementsprechend sind die Wälzkörper 20 im Durchmesser größer als die Wälzkörper 19, so dass die Reihe mit den Wälzkörpern 20 bei einer entsprechend großen Anzahl am Umfang verteilter Wälzkörper 20 größere Tragzahlen aufweist.

### Bezugszeichen

| | | | |
|---|---|---|---|
| 1 | Getriebevorrichtung | 21 | Innenring |
| 2 | Getriebevorrichtung | 22 | Mantelfläche |
| 3 | Rotationsachse | 23 | Zahnkranz |
| 4 | Getriebeelement | 24 | Reibelement |
| 5 | Getriebeelement | 25 | Reibelement |
| 6 | Zahnrad | 26 | Reibelement |
| 7 | Funktionsfläche | 27 | Synchronkupplung |
| 8 | Funktionsfläche | 28 | Kupplungskörper |
| 9 | Stufenbohrung | 29 | Bohrung |
| 10 | Hülsenelement | 30 | Innenring |
| 11 | außenzylindrische Fläche | 31 | Fläche |
| 12 | Bohrung | 32 | Innenmantelfläche |
| 13 | Buchse | | |
| 14 | Wälzlager | | |
| 15 | Wellenabschnitt | | |
| 16 | Getriebewelle | | |
| 17 | Bauteil | | |
| 18 | Nabe | | |
| 19 | Wälzkörper | | |
| 20 | Wälzkörper | | |

## Patentansprüche

1. Getriebevorrichtung (1, 2) mit mindestens zwei Getriebeelementen (4, 5), von denen ein Getriebeelement (4) drehbar um eine Rotationsachse (3) zu dem anderen Getriebeelement (5) an dem anderen Getriebeelement (5) gelagert ist, wobei wenigstens eines der Getriebeelemente (4, 5) zumindest zwei nebeneinander angereihte kreiszylindrische Funktionsflächen (7, 8) aufweist, welche dem anderen Getriebeelement (4, 5) zugewandt sind und deren Durchmesser sich unterscheiden, **dadurch gekennzeichnet, dass** die kreiszylindrischen Funktionsflächen (7, 8) an einem Hülsenelement (10) ausgebildet sind, wobei das Hülsenelement (10) mit dem einen der Getriebeelemente (4, 5) verbunden ist.

2. Getriebevorrichtung nach Anspruch 1, **dadurch gekennzeichnet, dass** die Funktionsflächen (7, 8) innen-kreiszylindrisch ausgebildet sind.

3. Getriebevorrichtung nach Anspruch 2, mit einem Getriebeelement (5), auf dem das eine als Zahnrad (6) ausgebildete Getriebeelement (4) drehbar gelagert ist, **dadurch gekennzeichnet, dass** das Hülsenelement (10) mit den innen-kreiszylindrisch ausgebildeten Funktionsflächen (7, 8) konzentrisch zur Rotationsachse (3) in dem Zahnrad (6) sitzt.

4. Getriebevorrichtung nach Anspruch 1, **dadurch gekennzeichnet, dass** die Funktionsflächen (7, 8) außen-kreiszylindrisch ausgebildet sind.

5. Getriebevorrichtung nach Anspruch 4, mit einem Getriebeelement (5), auf dem das eine als Zahnrad (6) ausgebildete Getriebeelement (4) drehbar gelagert ist, **dadurch gekennzeichnet, dass** das Hülsenelement (10) mit den außen-kreiszylindrischen Funktionsflächen (7, 8) konzentrisch zur Rotationsachse (3) auf dem Getriebelement (5) sitzt.

6. Getriebevorrichtung (1, 2) mit mindestens einem drehbar auf einem Wellenabschnitt (15) gelagerten Zahnrad (6), wobei das Zahnrad (6) mittels wenigstens eines Wälzlagers (14) drehbar auf dem Wellenabschnitt (15) gelagert ist, und wobei das Wälzlager (14) in einem Ringspalt radial zwischen dem Wellenabschnitt (15) und dem Zahnrad (6) eingesetzt ist, und dabei der Ringspalt in wenigstens einer radialen Richtung durch zwei benachbarte in gleiche radiale Richtung gewandte zylindrische Funktionsflächen (7, 8) begrenzt ist, wobei die gleich gewandten uns konzentrischen zylindrischen Funktionsflächen (7, 8) im Durchmesser voneinander abweichen, **dadurch gekennzeichnet, dass** die gleich gewandten zylindrischen Funktionsflächen (7, 8) an einem zumindest teilweise zwischen dem Wellenabschnitt (15) und dem Zahnrad (6) angeordneten hohlzylindrischen Bauteil (17) ausgebildet sind.

7. Getriebevorrichtung nach Anspruch 6, **dadurch gekennzeichnet, dass** das Bauteil (17) eine in dem Zahnrad (6) sitzende Buchse ist, wobei die zylindrischen Funktionsflächen (7, 8) radial nach innen gewandt sind.

8. Getriebevorrichtung nach Anspruch 6, **dadurch gekennzeichnet, dass** das Bauteil (17) ein Ring (30) auf dem Wellenabschnitt (15) ist, wobei die zylindrischen Funktionsflächen (7, 8) radial nach außen gewandt sind.

9. Getriebevorrichtung nach Anspruch 6, **dadurch gekennzeichnet, dass** die Funktionsflächen Laufbahnen für jeweils mindestens eine Reihe Wälzkörper (19, 20) des Wälzlagers (14) sind, wobei die Reihen nebeneinander angeordnet sind.

10. Zahnrad (6) mit einer Stufenbohrung (9), **dadurch gekennzeichnet,**
**dass** in dem Zahnrad (6) eine Buchse sitzt, in welcher die Stufenbohrung (9) ausgebildet ist, wobei die Stufenbohrung (9) radial nach innen durch zwei benachbarte innen-zylindrische Flächen (7, 8) begrenzt ist, und wobei die eine der Flächen (7, 8) einen größeren Durchmesser aufweist als die andere der Flächen (7, 8).
